# EUROPÄISCHE PATENTSCHRIFT

(11) **EP 1 863 875 B1**
(45) Veröffentlichungstag und Bekanntmachung des Hinweises auf die Patenterteilung: **09.12.2009**
(21) Anmeldenummer: 06723718.0
(22) Anmeldetag: 24.03.2006
(51) Int. Cl.: C08L 83/04, C08G 77/12, B32B 27/36, C08K 5/5425, C08K 5/5435, C08L 83/08, C08L 83/12, C08L 83/06

(54) **SELBSTHAFTENDE ADDITIONSVERNETZENDE SILICONKAUTSCHUKMISCHUNGEN, EIN VERFAHREN ZU DEREN HERSTELLUNG, VERFAHREN ZUR HERSTELLUNG VON VERBUND-FORMTEILEN UND DEREN VERWENDUNG**
SELF-ADHESIVE ADDITION CROSS LINKING SILICON-RUBBER BLENDS, METHOD FOR THE PRODUCTION THEREOF, METHOD FOR PRODUCING COMPOSITE MOULDED PARTS AND THE USE THEREOF
MELANGES DE CAOUTCHOUC SILICONE RETICULANT PAR ADDITION ET AUTOCOLLANTS, PROCEDE DE FABRICATION ASSOCIE, PROCEDE POUR REALISER DES ELEMENTS MOULES COMPOSITES ET LEUR UTILISATION

(30) Priorität: 24.03.2005 DE 102005014289
(43) Veröffentlichungstag der Anmeldung: 12.12.2007
(73) Patentinhaber: Momentive Performance Materials GmbH, 51368 Leverkusen (DE)
(72) Erfinder: BOSSHAMMER, Stephan, 50679 Köln (DE)
(74) Vertreter: Gille Hrabal Struck Neidlein Prop Roos
(86) Internationale Anmeldenummer: PCT/EP2006/002739
(87) Internationale Veröffentlichungsnummer: WO 2006/100098

(56) Entgegenhaltungen:
- EP-A- 0 686 671
- EP-A- 1 106 662
- EP-A- 1 375 622
- WO-A-03/066736
- GB-A- 2 316 946
- US-A- 5 432 280

## Beschreibung

Die vorliegende Erfindung betrifft additionsvernetzende Siliconkautschukmischungen, ein Verfahren zu deren Herstellung, Verfahren zur Herstellung von Verbundformteilen und deren Verwendung.

Die erfindungsgemäßen selbsthaftenden additionsvernetzenden Siliconkautschukmischungen zeichnen sich durch eine gute Haftung auf Substraten aus, ohne dass gleichzeitig die zur Herstellung der Formteile verwendeten Formen einer speziellen Behandlung bedürfen, die ein Ablösen der additionsvernetzten Siliconkautschukmischungen aus der Form ermöglicht. Weiterhin ist in der Regel keine Nachtemperung der Verbundformteile erforderlich.

Es wurden eine Reihe von Methoden vorgeschlagen, einen Haftverbund zwischen additionsvernetzenden Siliconelastomeren und verschiedenen Substraten zu erreichen. Eine Möglichkeit ist die Verwendung eines sogenannten Primers, der zur Vorbehandlung der Substratoberfläche eingesetzt wird. Dies erfordert bei der Verarbeitung einen zusätzlichen Arbeitsschritt sowie den Umgang mit Lösungsmitteln. Beides ist nachteilig. Eine weitere Möglichkeit besteht darin, durch Zusatz eines oder mehrerer Additive zur unvernetzten Siliconkautschukmischung Haftung von additionsvernetzenden Siliconelastomeren auf Substraten zu erreichen.

Eine andere Variante stellt die Herstellung eines Thermoplast-Siloxanblends dar, bei dem unterschiedliche Siloxane in die Thermoplastmatrix vor der Formgebung eingemischt wurden und die Oberfläche von Formteilen aus diesem Thermoplastblend mit einem additionsvernetzenden Siliconkautschuk zur Haftung gebracht werden. US 5 366 beansprucht hierbei Hydrogensiloxane mit zusätzlichen Alkenylgruppe in der Thermoplastmatrix, die mit additionsvernetzenden Polyorganosiloxankautschuken, die vorzugsweise weitere organofunktionelle SiH-Haftvermittler enthalten können, haftend verbunden werden.

Die US 5 366 805 offenbart ein Polycarbonat, welches hydrogensiloxanhaltige Siloxan-Co- oder Terpolymere mit Epoxy- oder Arylgruppen enthält. Die US 5 418 065 schlägt statt eines siloxanhaltigen Thermoplasten ein Polypropylenterpolymer vor, das additionsvernetzenden Polyorganosiloxankautschuk und epoxyhaltige SiH-Siloxanen enthält, der bei der Vernetzung zur Haftung gebracht wird. Die Haftung erfolgt beispielhaft bei 8 min 120°C. Dabei wird das Thermoplastteil unmittelbar vor dem Auftragen des Siliconkautschukes gespritzt. Das System erlaubt die Entformung des Verbundteiles aus einer Metallform.

Ein anderer Lösungsweg ist die Bereitstellung von additionsvernetzenden Polyorganosiloxankautschuken, die je nach Art des Thermoplastsubstrates ein oder mehrere Additive enthalten, und bei unterschiedlichen Bedingungen auf diesem Thermoplast während der vernetzung zur Haftung gebracht werden können. Dabei ist es wünschenswert insbesondere Thermoplasten mit hoher Erweichungstemperaturen zur Haftung mit Silicon kautschuk zu bringen und umgekehrt die Haftung zum metallischen Formenmaterial, d.h. in der Regel Stahl, möglichst klein zu halten.

Nach US 4 087 585 wird z.B. durch den Zusatz von zwei Additiven, einem kurzkettigen Polysiloxan mit mindestens einer SiOH-Gruppe und einem Silan mit mindestens einer Epoxygruppe und einer Si-gebundenen Alkoxygruppe, eine gute Haftung auf Aluminium erreicht. Gemäss J. Adhesion Sci. Technol. Vol. 3, No. 6 pp 463-473 (1989) wird durch Zusatz eines Epoxysilans in Kombination mit einem homopolymeren Vernetzer eine gute Haftung zu verschiedenen Metallen und Kunststoffen erreicht. In EP-A 875 536 wird eine verbesserte Haftung auf verschiedenen Kunststoffen mittels Verwendung eines Alkoxysilans mit einer Epoxygruppe sowie eines Hydrogensilans mit mindestens 20 SiH-Funktionen pro Molekül erreicht, wobei sich diese Mischungen auch durch eine verbesserte Reaktivität auszeichnet.

Die EP 350 951 beschreibt die Verwendung einer Kombination von Acryl- oder Methacrylalkoxysilan mit einem epoxyfunktionellen Silan und einem partiellen Allylether eines mehrwertigen Alkohols als Additive zur Erzielung einer dauerhaften Haftung additionsvernetzender Siliconelastomere auf Glas und Metall.

Diese Mischungen haben den Nachteil, dass sie auch eine gute Haftung zu Metallen aufweisen und somit problematisch bei der Verarbeitung mit unbeschichteten metallischen Formen sind.

In der EP-A2-1085053 wird offenbart, dass durch Zugabe einer Kombination von Glycidoxypropyltrimethoxysilan und Methacryloxypropyltrimethoxysilan eine gute Haftung zu Polyamid und Poiybutylenterephthalat durch Nachtemperung der Verbundteile bei leichter Entformbarkeit aus unbeschichteten Stahlformen erreicht wird. Jedoch wird eine relativ hohe Menge der Silane verwendet und zur Erreichung einer guten Endhaftung in der Regel eine Nachtemperung der Verbundformteile empfohlen, was einen zusätzlichen Arbeitsschritt bedeutet.

US 4 082 726 offenbart die Verwendung eines Terpolymeren, d.h. eines Siloxanes, das aus mindestens 3 unterschiedlichen Siloxygrupppen besteht. Dieses kann neben Si-Epoxygruppen u.a. Si-Phenyl-; SiH- sowie andere Siloxyeinheiten enthalten. Dieses Epoxysiloxan wird neben nahezu beliebigen Alkenylsiloxanen A) sowie einem Hydrogensiloxan B) verwendet, um Haftung zwischen einem Thermoplastsubstrat und einem additionsvernetzenden Polyorganosiloxankautschuk herzustellen. Es wurden keine bevorzugten Konzentrationen für die organofunktionellen Einheiten am Silicium offenbart. Die Gegenwart des epoxyhaltigen Terpolymers bewirkt sowohl eine Thermoplast- als auch eine Metallhaftung.

US 5 405 896 offenbart statt des epoxyhaltigen Siloxanterpolymeren ein Co- bzw. Terpolymer mit mindestens einer sauerstoffhaltigen Phenylen-Gruppe sowie mindestens einer SiH-Giuppe . Die Siliconkautschuke werden beispielhaft während 8 min bei 120 °C auf der Thermoplastoberfläche haftend gehärtet. Die Entformung gelingt in einer nicht beschichteten Metallform.

Die US 6 127 503 schlägt statt des sauerstoffhaltigen Siloxan- Co- bzw. Terpolymeren ein Terpolymer mit mindestens einer Phenyl- bzw. Phenylen-Einheit, einer stickstoffhaltigen Einheit sowie einer SiH-Gruppe vor. Die Siliconkautschuke werden beispielhaft während 10 min bei 120°C auf der Thermoplastoberfläche haftend gehärtet.

In der EP 686 671 (US 5 536 803) wird die Verwendung eines Organohydrogenpolysiloxans als Additiv beschrieben, wobei mindestens 12-Mol.-% der monovalenten Si-gebundenen organischen Radikale aromatische Gruppen sind. Hierbei wurde zwar Haftung zu ABS, die nicht quantifiziert wurde, und eine leichte Entformbarkeit gegenüber metallischen Oberflächen festgestellt, eine Bewertung der typischen technischen Thermoplasten wie z.B. Polyamid, Polybutylenterephthalat oder Polyphenylensulfid wurde nicht vorgenommen. Eine spezifische Aufgabenstellung für diese Thermoplasten wurde nicht gesehen. Ebenso wurde kein bevorzugter Bereich für den SiH-Gehalt der entsprechenden Siloxan-Komponenten offenbart. Die Siliconkautschuke brachte man beispielhaft während 100 sec bis 8 min bei 60-100 °C auf der Thermoplastoberfläche während der Vernetzung zur Haftung. Der SiH-Gehalt wird allgemein mit mehr als 2 Wasserstoffatomen- je Molekül angegeben. In den konkreten Beispielen wird ein Wasserstoffgehalt von 6 Hydrogensiloxyeinheiten je Molekül nicht überschritten.

Aus der EP-A2-1106662. sind selbsthaftende additionsvernetzende Silikonelastomer-Zusammensetzungen bekannt, die Polyorganohydrogensiloxane verwenden, die durchschnittlich weniger als 20 SiH-Gruppen im Molekül aufweisen. Die Verwendung solcher Polyorganohydrogensiloxane mit weniger als 20 SiH-Gruppen im Molekül wird als wesentlich beschrieben, da die Lagerstabilität additionsvernetzender Siliconkautschukmischungen erheblich, d.h. die Fliessfähigkeit massiv beeinträchtigt wird.

Aus der EP-B1-1375622 sind ebenfalls additionsvernetzende Siliconelastomer-Zusammensetzungen bekannt, die Polyorganohydrogensiloxane sowie einen spezifischen Haftvermittler auf der Basis von Biphenylverbindungen enthalten. Die Verwendung solcher Biphenylverbindungen ist jedoch aufgrund ihres relativ hohen Preises nachteilig.

Aus der WO 03/066736 sind ebenfalls additionsvernetzende Siliconelastomer-Zusammensetzungen bekannt die relativ SiH-Gruppen-reiche, phenylgruppen-freie Organohydrogenpolysiloxane sowie phenylgruppen-enthaltende Organohydrogen-polysiloxane enthalten. Die verwendeten phenylgruppen-enthaltende Organohydrogenpolysiloxane sind relativ SiH-arm.

Die Erfinder der vorliegenden Patentanmeldung fanden überraschend, dass selbsthaftende additionsvernetzende Siliconelastomer-Zusammensetzungen, die einen SiH-Gehalt von mehr als durchschnittlich 20 SiH-Gruppen je Molekül aufweisen, bei vergleichsweise niedrigem Gehalt aromatischer Gruppen lagerstabil sind, auf einer Vielzahl von Substraten besser haften, eine hohe Vernetzungsgeschwindigkeit gewährleisten und trotzdem aus den damit gefüllten Spritzgussformen entformbar sind.

Aufgabe der vorliegenden Erfindung ist die Bereitstellung von additionsvernetzenden Siliconkautschukmischungen mit einer guten Haftung auf verschiedenen Substraten, insbesondere technischen Thermoplasten mit hoher Erweichungstemperatur wie Polyamid, Polybutylenterephthalat oder Polyphenylensulfid, ohne dass für die Verarbeitung auf einem Spritzgussautomaten die Werkzeuge zur Verhinderung einer Werkzeughaftung beschichtet oder mit Formtrennmitteln behandelt werden müssen und ohne dass die Verbundteile in der Regel nachgetempert werden müssen. Dazu wird nach einfach und preiswert herstellbaren Zusatzkomponenten für Siliconkautschuke gesucht, die auch als getrennte Komponente in kommerziell bekannte bevorzugt 2-Komponenten Kautschuke getrennt zugegeben werden können.

Gegenstand der Erfindung sind daher additionsvernetzende Siliconkautschukmischungen, enthaltend:
a) mindestens ein lineares oder verzweigtes Organopolysiloxan mit mindestens zwei Alkenylgruppen mit einer Viskosität von 0,01 bis 30.000 Pa.s (25 °C),
b1) mindestens ein Organohydrogensiloxan mit jeweils im Mittel mindestens 20 SiH-Einheiten pro Molekül, das mindestens einen organischen Rest aufweist, der mindestens einen Bestandteil enthält, der ausgewählt wird aus aromatischen Gruppen,
b2) gegebenenfalls ein oder mehrere Organohydrogenpolysiloxane, die im Mittel mindestens zwei SiH-Gruppen pro Molekül aufweisen und in denen die organischen Reste ausgewählt sind aus: gesättigten und ungesättigten aliphatischen Kohlenwasserstoffresten,
c) mindestens einen Hydiosilylierungs-Katalysator,
d) mindestens einen Bestandteil, der aus der Gruppe ausgewählt ist, die besteht aus: Alkoxysilanen und/oder Alkoxysiloxanen, die jeweils mindestens eine Epoxygruppe aufweisen, Acryl- und Methacryloxyalkyltrialkoxysilanen, sowie Kondensationsprodukten der zuvor genannten Verbindungen durch Reaktion mit Wasser, Alkoholen, Silanolen und/oder Siloxandiolen,
e) gegebenenfalls mindestens einen Inhibitor,
f) gegebenenfalls mindestens einen, gegebenenfalls oberflächlich modifizierten Füllstoff,
g) gegebenenfalls mindestens einen Hilfsstoff.

Bevorzugt weisen die erfindungsgemäßen, additionsvernetzenden Siliconkautschukmischungen die folgende Zusammensetzung auf (Teile sind Gewichtsteile):

| | |
|---|---|
| 100 Teile | Polyorganosiloxan(e) a) |
| 0,2-60 Teile | Organohydrogensiloxan(e) b) |
| 1 - 1000 ppm, | bezogen auf den Metallgehalt des Katalysators c) und Gesamtmenge der Siliconkautschukmischung. |
| 0,01 10 Teile | des Epoxyalkoxysilanes bzw. Epoxyalkoxysiloxanes d) |
| 0-2 Teile | des Inhibitors e) |
| 0 - 300 | Teile des gegebenenfalls oberflächlich modifizierten Füllstoffs f) |
| 0-15 | Teile der Hilfstoffe g). |

Die erfindungsgemäße, additionsvernetzende Siliconkautschukmischung enthält a) mindestens ein lineares oder verzweigtes Organopolysiloxan mit mindestens zwei Alkenylgruppen mit einer Viskosität von 0,01 bis 30.000 Pa.s (25 °C).

Das Organopolysiloxan a) kann ein verzweigtes Polysiloxan sein. Der Begriff "verzweigtes Polysiloxan" schließt auch makrocyclische bzw. spirocyclische Strukturen ein, d.h. dies sind unter 90 °C schmelzende Feststoffe mit Schmelzviskositäten des genannten Viskositätsbereiches oder Feststoffe, die in üblichen Lösungsmiteln oder Siloxanpolymeren löslich sind.

Die Komponente a) weist im wesentlichen keine Si-H-Gruppen auf.

Das Organopolysiloxan a) ist bevorzugt ein lineares oder verzweigtes Polysiloxan, das die folgenden Siloxy-Einheiten aufweisen kann: 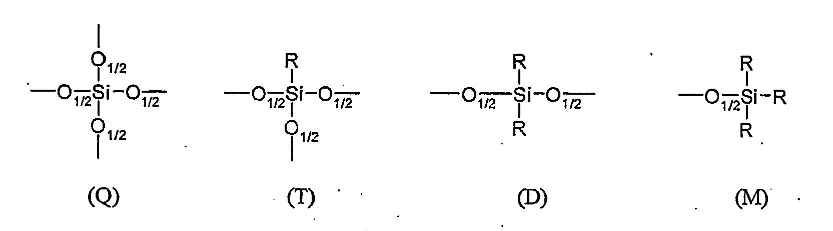 worin die Substituenten R gleich oder verschieden sein können und aus der Gruppe ausgewählt werden, die besteht aus
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl und Halogen, insbesondere Fluor, besteht,
- einem geradkettigen, verzweigten oder cyclischen Alkenylrest mit bis zu 12 Kohlenstoffatomen,
- einem Phenylrest,
- Hydroxyl und
- einem geradkettigen, verzweigten oder cyclischen Alkoxyrest mit bis zu 6 Kohlenstoffatomen,
oder zwei Substituenten R aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
mit der Maßgabe, dass mindestens zwei Substituenten R je Molekül den genannten Alkenylrest darstellen, der gleich oder verschieden sein kann.

Die genannten Siloxyeinheiten können untereinander statistisch verteilt oder blockartig angeordnet vorliegen.

Ein bevorzugter geradkettiger, verzweigter öder cyclischer Alkylresten mit bis zu 12 Kohlenstoffatomen ist Methyl.

Ein bevorzugter, mit Phenyl substituierter Alkylrest schließt beispielsweise Styryl (Phenylethyl) ein.

Ein bevorzugter, mit Halogen substituierter Alkylrest schließt beispielsweise einen Fluoralkylrest mit mindestens einem Fluoratom ein, wie zum Beispiel Perfluoralkylethyl-Reste wie zum Beispiel bevorzugt 3,3,3-Trifluorpropyl oder Perfluoralklyether bzw Epoxy-perfluoralkylether.

Geradkettige oder verzweigte Alkenylreste mit 2 bis 8 Kohlenstoffatomen schließen beispielsweise ein: Vinyl, Allyl, Hexenyl, Octenyl, Vinylphenylethyl, Cyclohexenylethyl, Ethylidennorbomyl bzw. Norbomenylethyl oder Limonyl. Besonders bevorzugt ist Vinyl.

Ein bevorzugter geradkettiger, verzweigter oder cyclischer Alkoxyrest mit bis zur 6 Kohlenstoffatomen ist beispielsweise Methoxy und Ethoxy.

Bevorzugte Reste R sind somit Methyl, Phenyl, Vinyl und 3,3,3-Trifluorpropyl.

Bevorzugte Siloxy-Einheiten sind beispielsweise Alkenyleinheiten, wie Dimethylvinylsiloxy-, Methylvinylsiloxy-, Vinylsiloxy-Einheiten, Alkyleinheiten, wie Trimethylsiloxy-, Dimethylsiloxy- und Methylsiloxy-Einheiten, Phenylsiloxyeinheiten, wie Triphenylsiloxy-, Dimethylphenylsiloxy-, Diphenylsiloxy-, Phenylmethylsiloxy- und Phenylsiloxyeinheiten, phenylsubstituierte Alkylsiloxyeinheiten, wie (Methyl)(Styryl)siloxy.

Bevorzugt weist das Organopolysiloxan a) eine Anzahl der Siloxy-Einheiten von 100 bis 10000, besonders bevorzugt 300 bis 1000 auf.
Der Alkenylgehalt des Organopolysiloxans a) liegt bevorzugt im Bereich von 0,003 mmol/g bis 11,6 mmol/g bezogen auf die vinylsubstituierten Polydimethylsiloxane, der entsprechend äquimolar auf andere Reste R mit dazu unterschiedlichem Formelgewicht übertragen wird.

Das Organopolysiloxan a) weist eine Viskosität von 0,001 bis 30 kPa.s, ganz besonders bevorzugt 5 bis 200 Pa.s auf. Die Viskosität wird gemäß DIN 53 019 bei 25 °C bestimmt.

In einer bevorzugten Ausführungsform der Erfindung umfasst das Organopolysiloxan a) ein Gemisch verschiedener Organopolysilöxane mit unterschiedlichen Alkenyl-(bevorzugt Vinyl-) gehalten, deren Alkenyl- bzw. Vinylgehalte sich bevorzugt mindestens um den Faktor 1,5 - 3 unterscheiden.

Ein bevorzugtes Gemisch der Organopolysiloxane a) ist eine Mischung, die ein alkenylgruppenreiches (bevorzugt vinylgruppenreiches) Organopolysiloxan und mindestens ein, bevorzugt mindestens zwei, besonders bevorzugt zwei alkenylgruppenarmen (bevorzugt vinylgruppenarmen) Organopolysiloxanen umfasst.

Das alkenylgruppenreiche (bevorzugt vinylgruppenreiche) Organopolysiloxan weist bevorzugt einen Alkenylgruppengehalt von mehr als 0,4 mmol/g bis 11,6 mmol/g bezüglich der vinylsubstituierten Polydimethylsiloxane auf, der entsprechend äquimolar auf andere Reste R anzupassen ist.

Diese Siloxanpolymer können vorzugsweise verzweigte Polysiloxane darstellen, wie zuvor definiert, d.h. unter 90 °C schmelzende Feststoffe bzw. Feststoffe, die in üblichen Lösungsmiteln oder Siloxanpolymeren löslich sind,
Das alkenylgruppenarme (bevorzugt vinylgruppenarme) Organopolysiloxan weist bevorzugt einen Alkenylgruppengehalt von weniger als 0,4 mmol/g, bevorzugt 0,02 bis 0,4 mmol/g auf.
Der Alkenylgehalt wird hier über ¹H-NMR bestimmt siehe A.L. Smith (Ed.) : The Analytical Chemistry of Silicones, J.Wiley & Sons 1991 Vol. 112 S. 356 ff in Chemical Analysis ed. by J.D. Winefordner. Vorzugsweise wird der Alkenylgruppengehalt durch Alkenyldiniethylsiloxyeinheiten eingestellt. Dadurch ergibt sich neben den unterschiedlichen Alkenylgehalten eine unterschiedliche Kettenlänge und damit eine unterschiedliche Viskosität.
Durch die Verwendung der vorstehend beschriebenen Gemische mit unterschiedlichen Alkenyl- (bevorzugt Vinyl-)Gehalten ist es möglich, die mechanischen Eigenschaften, wie Dehnung und Weiterreißfestigkeit der erfindungsgemäßen vernetzten Silikonkautschuke zu optimieren.
Das Mischungsverhältnis der alkenylgruppenreichen Organopolysiloxane a) liegt bevorzugt bei 0,5 bis 30 Gew.-%, bezogen auf die Gesamtmenge der Organopolysiloxane a). Der Gesamtalkenylgelialt eines Gemisch verschiedener Organopolysiloxane mit unterschiedlichen Alkenyl-(bevorzugt Vinyl-)gehalten sollte bevorzugt weniger als 0,9 mmol/g betragen.

Die Organopolysiloxane a) können nach an sich bekannten Verfahren hergestellt werden, wie zum Beispiel mit alkalischen oder sauren Katalysatoren, wie in US 5,536,803 Spalte 4.

Die Menge der Organopolysiloxane a) kann bevorzugt zwischen etwa 20,5 und 99,8 Gew.-% bezogen auf die Gesamtmenge der Silikonkautschukmischung betragen.

Die alkenylgruppenreichen Organopolysiloxane schließen insbesondere in Lösungsmitteln lösbare Festharze oder Flüssigharze ein; die bevorzugt aus Trialkylsiloxy (M-Einheiten) und Silicateinheiten (Q-Einheiten) bestehen, und die bevorzugt, Vinyldimethylsiloxyeinheiten in einer Menge enthalten, so dass ein Gehalt der Vinylgruppen von mindestens 2 mmol/g resultiert. Diese Harze können darüber hinaus noch bis maximal 10 Mol.-% Alkoxy- oder OH-Gruppen an den Si-Atomen aufweisen.

Die Komponente b1) der erfindungsgemäßen, additionsvernetzenden Silikonkautschukmischung ist mindestens ein Organohydrogensiloxan mit jeweils im Mittel mindestens 20 SiH-Einheiten pro Molekül. Weisen die Organohydrogensiloxane weniger als 20 SiH-Einheiten pro Molekül auf, ist die Haftung an Substraten, wie insbesondere thermoplastische Kunststoffe, verringert. Die erfindungsgemäß verwendeten Organohydrogensiloxane b1) enthalten bevorzugt durchschnittlich mindestens 23 SiH-Gruppen im Molekül, noch bevorzugter mindestens 30 SiH-Gruppen im Molekül.

Weiterhin weist das Organohydrogensiloxan b1) mindestens einen organischen Rest auf, der mindestens einen Bestandteil enthält, der ausgewählt wird aus aromatischen Gruppen.

Das Organohydrogensiloxan b1) wird aus lineare, verzweigten oder cyclischen Polysiloxanen ausgewählt, die die folgenden Siloxy-Einheiten aufweisen können: 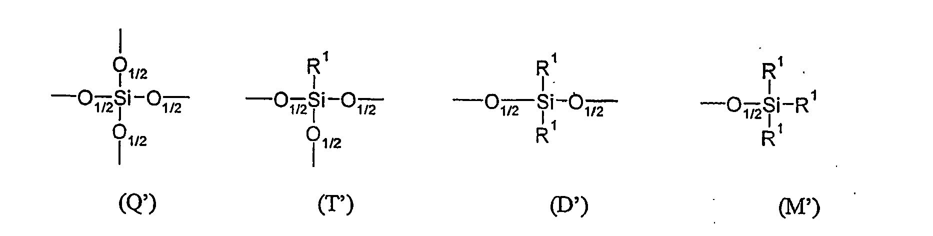 worin R¹ gleich oder verschieden sein kann und aus der Gruppe ausgewählt wird, die besteht aus
- Wasserstoff,
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl, Naphthyl, Biphenyl, Biphenylether und Halogen, insbesondere Fluor, besteht,
- einem geradkettigen, verzweigten oder cyclischen Alkenylrest mit bis zu 12 Kohlenstoffatomen,
- einer aromatischen Gruppe und
- einem geradkettigen, verzweigten oder cyclischen Alkoxyrest mit bis zu 6 Kohlenstoffatomen,
oder zwei Gruppen R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen.

Bevorzugt beträgt der Si-H-Gehalt des Organohydrogensiloxans b1) in einer ersten Ausführungsform, definiert als das Verhältnis der siliziumgebundenen H-Atome bezogen auf die Summe der siliziumgebundenen H-Atome und der siliziumgebundenen organischen Gruppen mehr als 36 Mol.-%.

Organohydrogensiloxan b1) weist mindestens eine gegebenenfalls substituierte aromatische Gruppe, besonders bevorzugt eine Phenyl-, Naphthyl-, Biphenyl- oder Biphenylether-Gruppe auf. Bevorzugte aromatische Einheiten als Substituent R1 schließen zum Beispiel ein: aromatische Einheiten, bei denen die aromatische Gruppe direkt an ein Siliziumatom gebunden ist, wie Phenyl, C1-C10-Alkylphenyl, C2-C10-Alkylenphenyl, C1-C10-Alkoxyphenyl, C2-C10-Alkylenoxyphenyl, Halogenplienyl und Naphthyl, und aromatische Einheiten, bei denen die aromatische Gruppe via eine Alkylgruppe mit dem Siliziumatom verbunden ist, wie Phenyl(C1-C12)-alkyl. Bevorzugt sind aromatische Gruppen, insbesondere Phenyl, die direkt an ein Siliziumatom gebunden ist.

Der Gehalt an organischen Resten, die aromatische Gruppen enthalten, im Organohydrogenpolysiloxan b1) beträgt bevorzugt, bezogen auf die Menge aller Reste an den Siliziumatomen (mit Ausnahme der Si-O-Si-Sauerstoffatome), also einschließlich der Wasserstoffatome und der organische Reste, weniger als 12 Mol.-%, bevorzugt weniger als 8 Mol.%, noch bevorzugter weniger als 7,4 Mol.%. Bevorzugt beträgt die Mindestmenge an aromatischen Gruppen 0,5 Mol.%, noch bevorzugter 1 Mol.-%.

Das bevorzugte Organohydrogensiloxan b1) ist ein lineares triorganosiloxy- und/oder diorganohydrogensiloxy-endgestopptes Organohydrogensiloxan, worin die Triorganosiloxy-Endgruppen ausgewählt werden aus der Gruppe, die besteht aus Trimethylsiloxy, Triphenylsiloxy, Diphenylmetlrylsiloxy, Phenyldimethylsiloxy, Phenylethyldimethylsiloxy und Phenylpropyldimethylsiloxy, die Diorganohydrogensiloxy-Endgruppe bevorzugt eine Dimethylhydrogensiloxy-Gruppe ist, und das im Mittel 20 bis 1000 Methylhydrogensiloxy-Einheiten, im Mittel 0 bis 500, Dimethylsiloxy Einheiten, im Mittel weniger als 360 (Methyl)(Phenyl)-Siloxy-Einheiten und/oder im Mittel weniger als 180 Diphenylsiloxy-Einheiten, bevorzugt weniger als 111 bzw. 222 aufweisen.

Das molare Verhältnis von Dimethylsiloxy zu Methyl-Hydrogen-Siloxy-Einheiten ist bevorzugt kleiner als 0,1.

Bevorzugt weisen die Organohydrogensiloxan b1) einen Gehalt von mehr als 2 inmol SiH/g bis zu etwa 16 mmol SiH/g auf. Besonders bevorzugt weist das Organohydrogensiloxan b1) einen Gehalt von mehr als 7 mmol SiH/g
bezogen auf Polymethylhydrogendimethylsiloxane auf, der entsprechend bei Anwesenheit von Resten R1 mit anderem Formelgewicht äquimolar anzupassen ist.

Die Viskosität der Organohydrogensiloxane b1) liegt beispielsweise bei 10 mPa.s bis 100 Pa.s, bevorzugt 15 mPa.s bis 10 Pa.s (25°C).

Der SiH-Gehalt wird hier über 1H-NMR bestimmt siehe A.L. Smith (Ed.): The Analytical Chemistry of Silicones, J.Wiley & Sons 1991 Vol. 112 S. 356 ff. in Chemical Analysis ed. by J.D. Winefordner. Der Si-Phenyl-Gehalt wird ebenfalls über 1H-NMR bzw. 29Si-NMR bestimmt siehe A.L. Smith (Ed.); ebd..

Die erfindungsgemäße additionsvernetzende Siliconkautschukmischung enthält weiterhin gegebenenfalls ein oder mehrere Organohydrogensiloxane b2), deren organische Reste aus gesättigten oder ungesättigten Kohlenwasserstoffresten ausgewählt sind, d.h., die keine aromatischen Gruppen enthalten. Weiterhin enthalten die Organohydrogenpolysiloxane b2) im Mittel mindestens zwei SiH-Gruppen pro Molekül.

Besonders bevorzugt ist es, dass sowohl die Komponente b1) als auch die Komponente b2) vorliegen. Weiterhin ist es bevorzugt, dass sowohl die Komponente b1) als auch die Komponente b2) aus mindestens einem Triorganosiloxy- öder Diorganohydrogensiloxy-endgestopptes Polyorganohydrogensiloxan mit mehr als 20 SiH-Einheiten ausgewählt werden.

Das Organohydrogensiloxan b2) ist bevorzugt ein lineares, verzweigtes, oder cyclisches Polysiloxan, das die folgenden Siloxy-Einheiten aufweisen kann: 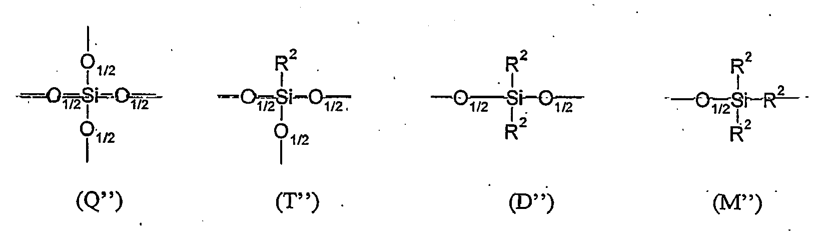 worin die Substituenten R² gleich oder verschieden sein können und aus der Gruppe ausgewählt werden, die besteht aus
- Wasserstoff,
- einen geradkettigen, verzweigten oder cyclischen Alkylrest mit bis zu 12 Kohlenstoffatomen,
- einem geradkettigen, verzweigten oder cyclischen Alkenylrest mit bis zu 12 Kohlenstoffatomen,
- einem geradkettigen, verzweigten oder cyclischen Alkoxyrest mit bis zu 6 Kohlenstoffatomen,
oder zwei Substituenten R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,

Die Organohydrogensiloxane b2) werden optional eingesetzt. Sie finden insbesondere dann Anwendung, wenn die Vernetzungsgeschwindigkeit, die gummimechanischen Eigenschaften, wie die Weiterreißfestigkeit, oder Alterungseigenschaften, wie die Heißluftstabilität; optimiert werden müssen.

Der SiH-Gehalt der gegebenenfalls vorhandenen Komponente b2) liegt bei 0,2 - 16 mmol/g, bevorzugt bei 4 - 16 mmol/g, bezogen auf Polymethylhydrogendimethylsiloxane,der entsprechend bei Anwesenheit von Resten R² mit anderem Formelgewicht äquimolar anzupassen ist.

Die Zahl der Siloxy-Einheiten liegt im Falle der Organohydrogensiloxane b2) bevorzugt bei 5 bis 1000, bevorzugter jedoch bei 10 bis 500, noch bevorzugter bei 10-200.

Die Siloxy-Einheiten in b2) sind bevorzugt so abgestimmt, dass flüssige bzw. siloxanlösliche Hydrogensiloxane mit einer Viskosität von 0,5 - 50000 mPa.s bei 25 °C resultieren. Die Siloxane b2) umfassen auch die unter 90 °C schmelzenden Feststoffe mit Schmelzviskositäten des genannten Viskositätsbereiches oder Feststoffe, die in üblichen Lösungsmiteln oder Siloxanpolymeren löslich sind,

Die bevorzugten Vertreter sind Trimethyl- bzw. Hydrogendimethylsiloxy endgestoppte Polymethylhydrogendiorganosiloxane.

Die Herstellung der Organohydrogensiloxane b2) erfolgt in an sich bekannter Weise, wie zum Beispiel in US 5 536 803, wobei der SiH-Gehalt durch die Wahl geeigneter Gewichtsverhältnisse der Hydrogenorganosiloxy- zu den Organosiloxyeinheiten sowie monofunktionellen Endgruppen wie Trimethylsiloxygruppen eingestellt wird.

Die bevorzugte Menge der Organohydrogensiloxane b2) liegt bei 0 bis 30 Gew.-Teilen bezogen auf 100 Gewichtsteilen der Komponente a).

Die erfindungsgemäße, additionsvernetzende Siliconkautschukmischung enthält c) mindestens einen Pt- Ru- und/oder Rh-Katalysator für die Vernetzungsreaktion bzw. Hydrosilylierung. Platin-Katalysatoren sind bevorzugt. Besonders bevorzugte Katalysatoren c) sind vorzugsweise Pt (0)-Komplexe, Pt (II)- Komplexe oder deren Salze oder Pt (IV)-Komplexe oder deren Salze mit Liganden, wie Alkenylsiloxanen, Cycloalkyldienen, Alkenen, Halogenen bzw. Pseudohalogen, Carboxyl-, S- N - oder P-Gruppenhaltigen Liganden als Komplexbildner in katalytischen Mengen von 1 bis 1000 ppm bevorzugt 1- 100 ppm, besonders bevorzugt 1 - 20 ppm, bezogen auf Metall. Ru- und/oder Rh-Katalysatoren schließen beispielsweise ein: Rh- oder Ru-Komplexe bzw. Salze, wie Di-µ,µ'-dichloro-di(1,5-cyclooctadien)dirhodium. Als Rh-Verbindungen sind ebenfalls die in J. Appl. Polym. Sci 30, 1837-1846 (1985) beschriebenen Verbindungen einsetzbar.

Die erfindungsgemäße, additionsvernetzende Siliconkautschukmischung enthält wahlweise mindestens einen Inhibitor. Inhibitoren im Sinne der Erfindung sind alle gängigen Verbindungen, die bisher schon für die Verzögerung bzw. Inhibierung der Hydrosilylierung eingesetzt wurden. Beispiele für solche bevorzugten Inhibitoren sind Vinylmethylsiloxane wie z.B. 1,3-Divinyl-tetramethyldisiloxan, 1,3,5,7-Tetravinyl-1,3,5,7-tetramethylcyclotetrasiloxan, Alkinole wie 2-Methylbutinol-(2) oder 1-Ethinylcyclohexanol US 3 445 420 in Mengen von 50 bis 10.000 ppm sowie alle weiteren bekannten S-, N-bzw. P-haltigen Inhibitoren (DE-A 36 35 236), die es ermöglichen, die Reaktion der durch reine Pt-, Ru-, oder Rh-Katalysatoren der Komponente c) bewirkten Hydrosilylierung zu verzögern .

Die erfindungsgemäße, additionsvernetzende Siliconkautschukmischung enthält weiterhin mindestens einen Bestandteil, der aus der Gruppe ausgewählt ist, die besteht aus: Alkoxysilanen und/oder Alkoxysiloxanen, die jeweils mindestens eine Epoxygruppe aufweisen,Acryl- und Methacryloxyalkyltrialkoxysilanen, sowie Kondensationsprodukten der zuvor genannten Verbindungen durch Reaktion mit Wasser, Alkoholen, Silanolen und/oder Siloxandiolen.. Die Epoxygruppe ist zweckmäßig eine über eine Alkandiylgruppe an Si gebundene Epoxygruppe (Epoxy-(CH2)x-Si). Bevorzugt sind solche, die in der Alkoxyfunktion maximal 5C-Atome aufweisen und die üblicherweise 2, bevorzugter aber 3 Alkoxygruppen pro Molekül tragen. Hierzu gehören Epoxysilane und -siloxane wie sie in der EP 691 364 beschrieben werden.

Die Alkoxysilane d) umfassen auch Glycidoxypropyltrialkoxysilane sowie Dialkoxysilane oder 2-(3,4-Epoxycyclohexyl)ethyltrialkoxysilan, Epoxylimonyltrialkoxysilane, epoxydierte Norbornenylethyltrialkoxysilane bzw. Ethylidennorbornyltrialkoxysilane., sowie andere C₃- bis C₁₄-epoxydierte Alkenyl- bzw. Alkenylaryltrialkoxysilane, epoxydierte Trisalkoxysilylpropylallylcyanurate bzw. -Isocyanurate sowie jeweils ihre Dialkoxyderivate, Acryl- bzw. Methacryloxypropyltrialkoxysilane sowie ihre Kondensations-produkte nach Reaktion mit Wasser, Alkoholen oder Silanolen bzw. Siloxandiolen.

Bevorzugt sind Mono(epoxyorgano)trialkoxysilane, wie z.B. Glycidoxypropyltrimethoxysilan,2-(3,4-epoxycyclohexyl)ethyltrialkoxysilan, oder Methacryloxypropyltrimethoxysilan und/oder deren Siloxane, besonders bevorzugt sind Gemische aus Glycidoxypropyltrimethoxy- und Methacryloxypropyltrimethoxysilan in Mengen von 0,01 bis 10 Teilen, bezogen auf 100 Teile der Komponente a), bzw. etwa 0,002 bis 9,1 Gew.% bezogen auf die Gesamtmenge der additionsvernetzenden Siliconkautschukmischung.

Es können, wie bei der Komponente b1) beschrieben, auch durch Hydrosilylierung erzeugte Umsetzungsprodukte von d) mit a) und b) bzw. durch Kondensation erzeugte Umsetzungsprodukte von d) mit b) eingesetzt werden.

Die erfindungsgemäße, additionsvernetzende Siliconkautschukmischung enthält weiterhin wahlweise einen oder mehrere, gegebenenfalls oberflächlich modifizierten Füllstoff (f). Diese schließen beispielsweise ein: Alle feinteiligen Füllstoffe, d.h. mit Partikeln kleiner 100 µm, die die Pt-katalysierte Vernetzungsreaktion nicht stören, so dass elastomere Beschichtungen, Formkörper oder Extrudate erzeugt werden können

Das können mineralische Füllstoffe wie Silikate, Carbonate, Nitride, Oxide, Ruße oder Kieselsäuren sein. Vorzugsweise handelt es sich solche Füllstoffe, die die gummimechanischen Eigenschaften verstärkenden, wie z.B. pyrogene oder gefällte Kieselsäure mit BET-Oberflächen zwischen 50 und 400 m²/g, die auch oberflächlich behandelt sein können, in Mengen von 0 bis 300 Gewichtsteilen, vorzugsweise 10 bis 50 Teilen, bezogen auf 100 Gewichtsteile der Komponente a).

Füllstoffe mit BET-Oberflächen oberhalb 50 m²/g erlauben die Herstellung von Siliconelastomeren mit verbesserten gummimechanischen Eigenschaften. Die gummimechanische Festigkeit und die Transparenz steigen bei z.B. pyrogen Kieselsäuren, wie Aerosil, HDK, Cab-O-Sil , mit deren Oberfläche.

Darüberhinaus können zusätzlich oder ersatzweise sogenannte Extender-Füllstoffe, wie z.B. Quarzmehl, Diatomeenerden, Cristobalitmehle, Glimmer, Aluminumoxide, Ti-, Fe-, Zn-oxide, Kreiden oder Ruße mit BET-Oberflächen von 1-50 m²/g Verwendung finden.

Mit dem Begriff, Füllstoff f) sind die Füllstoffe inklusive ihrer an die Oberfläche gebundenen Hydrophobierungsmittel bzw. Dispergierungsmittel bzw. Process-Aids, gemeint, die die Wechselwirkung des Füllstoffes mit dem Polymers z.B. die verdickende Wirkung beinflussen. Bei der Oberflächenbehandlung der Füllstoffe handelt es ich vorzugsweise um eine Hydrophobierung mit Silanen oder Siloxanen. Sie kann z.B. 'in situ' durch den Zusatz von Silazanen, wie Hexamethylsilazan und/oder Divinyltetramethyldisilazan, und Wasser erfolgen, die 'In-situ' Hydrophobierung ist bevorzugt. Sie kann auch mit anderen gängigen Füllstoffbehandlungsmitteln, wie Vinylalkoxysilanen, wie z.B.
Vinyltrimethoxysilan, Oragnosiloxandiolen mit Kettenlängen von 2 - 50, um reaktive Stellen für die Vernetzungsreaktion bereitzustellen, sowie mit Fettsäure- oder Fettalkohol-Derivaten erfolgen.

Die erfindungsgemäße, additionsvernetzende Siliconkautschukmischung enthält weiterhin wahlweise mindestens einen Hilfsstoff g), wie z.B. Phenylsiloxan-Öle, die selbstschmierende Vulkanisate liefern, wie z.B. Copolymere aus Dimethylsiloxy- und Diphenylsiloxy- oder Methylphenylsiloxygruppen sowie Polysiloxane mit Methylphenylsiloxygruppen mit einer Viskosität von vorzugsweise 0,1- 10 Pa.s (25 °C)oder Farbmittel bzw. Farbpigmente als Farbpasten, zusätzliche Formtrennmittel wie Fettsäure- oder Fettalkoholderivate, Extrusionshilfsmittel, wie Borsäure oder PTFE-Pasten, Biocide wie z.B. Fungizide, Heißluftstabilisatoren, wie Fe-, Ti-, Ce-, Ni-,. Co-Verbindungen. Die Menge der Hilfsstoffe beträgt bevorzugt 0 bis 15 Gewichtsteile bezogen auf 100 Gewichtsteile der Komponente a) und liegt bevorzugt unterhalb von 13 Gew.-%, bezogen auf die Gesamtmenge der Kautschukmischung.

Die Erfindung betrifft weiterhin Organohydrogenpolysiloxane, dadurch gekennzeichnet, dass diese durchschnittlich mindestens 20 Hydrogensiloxy-Einheiten im Molekül aufweisen, dass diese Si-gebundene einwertige organische Reste mit aromatischen Gruppen enthalten, und der Gehalt der einwertigen organischen Reste, die aromatische Gruppen enthalten, weniger 12 Mol.-% beträgt. Für diese Organohydrogenpolysiloxane gelten bevorzugt die für die Komponente b1) zuvor genannten Vorzugsbereiche.

Die erfindungsgemäße additionsvernetzende Siliconkautschukmischung enthält bevorzugt keine separaten, Si-enthaltenden Biphenyl-Haftvermittler-Komponenten. Dies umfasst diejenigen Verbindungen, bei denen zwei Phenylgruppen über einen divalenten Rest, wie gegebenenfalls substituiertes Alkylen, SO₂-, -SO-, -CO-, -O-oder -O-Si(CH₃)₂-O-verbunden sind. Insbesondere ist bevorzugt kein Biphenylhaftvermittler gemäß der Definition der Komponente (C) gemäß EP 1375622 enthalten, auf die insoweit vollinhaltlich Bezug genommen wird.

Gegenstand der Erfindung ist weiterhin ein Verfahren zur Herstellung der additionsvernetzenden Siliconkautschukmischung, welches das Vermischen der Komponenten a) bis d) und wahlweise der Komponenten e) bis g) umfasst.

Das Vermischen erfolgt dabei vorzugsweise mit den für hochviskose Pasten geeigneten Mischern, wie z.B. Knetern, Dissolvern oder Planefenmischern unter Inertgasatmosphäre.

In einer bevorzugten Ausführungsform vermischt man die sogenannten verstärkenden Füllstoffe, das sind diejenigen mit BET-Oberflächen oberhalb 50 m²/g in der Weise, dass man sie beim Mischprozess 'in-situ' hydrophiert.

Dabei werden vorzugsweise die Organopolysiloxane a), Füllstoffe und das Hydrophobierungsmittel, vorzugsweise Hexamethyldisilazan und/oder Divinyltetramethyldisilazan mit Wasser in Gegenwart von Kieselsäuren Komponente f), bevorzugt bei Temperaturen von 90 bis 100°C mindestens 20 Minuten in einem für hochviskose Materialien geeigneten Mischaggregat, wie z.B. einem Kneter, Dissolver oder Planetenmischer, gerührt und anschließend bei 150 bis 160°C von überschüssigen Hydrophobierungsmitteln und Wasser zunächst durch Verdampfen bei Normaldruck und dann im Vakuum bei einem Druck von 100 bis 20 mbar befreit. Die weiteren Komponenten werden anschließend zweckmäßig über 10 bis 30 Minuten eingemischt.

In einer bevorzugten Ausführungsform des Verfahrens zur Herstellung der additionsvernetzenden Siliconkautschukmischung erfolgt zunächst die Herstellung mindestens einer Teilmischung, die mehr als eine aber nicht alle der Komponenten a) bis g) umfasst, beinhaltet.

Diese Aufteilung in Teilmischungen dient der besseren Handhabung der reaktiven Mischung aus den Bestandteilen a) bis d) sowie gegebenenfalls e) bis g). Insbesondere die Bestandteile b1) und b2) sollten zur Lagerung vorzugsweise vom Katalysator c) getrennt aufbewahrt werden. Der Bestandteil d) und der Inhibitor e) können mehr oder weniger vorteilhaft in jeder der Komponenten vorgehalten werden, soweit nicht gleichzeitig die miteinander reagierenden Komponenten a), b1)/b2) und c) nebeneinander vorliegen.

In einer bevorzugten Ausführungsform des erfindungsgemäßen Verfahrens zur Herstellung der additionsvernetzenden Siliconkautschukmischung wird zunächst eine erste Teilmischung durch Zusammengeben von
- mindestens einem Organopolysiloxan a)
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d), hergestellt,
   eine zweite Teilmischung durch Zusammengeben von
- gegebenenfalls einem Organopolysiloxan a),
- mindestens einem Organohydrogensiloxan b1),
- gegebenenfalls einem oder mehreren Organohydrogenpolysiloxan b2),
- gegebenenfalls mindestens einem Füllstoff f),
- gegebenenfalls mindestens einem Alkoxysilan und/oder Alkoxysiloxan d),
- gegebenenfalls mindestens einem Inbibitor e) und
- gegebenenfalls mindestens einem Hilfsstoff g) hergestellt,
und die beiden Teilmischungen anschließend vermischt werden.

In einer weiteren bevorzugten Ausführungsform des erfindungsgemäßen Verfahrens zur Herstellung der additionsvernetzenden Siliconkautschukmischung, in der die Komponente b2) verwendet wird, wird zunächst eine erste Teilmischung durch Zusammengeben von
- mindestens einem Organopolysiloxan a),
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d) sofern diese nicht in der zweiten öder dritten Teilmischung enthalten sind, hergestellt ,
   eine zweite Teilmischung durch Zusammengeben von
- mindestens einem Organohydrogensiloxan b2),
- gegebenfalls mindestens einem Organopolysiloxan a),
- gegebenenfalls mindestens einem Füllstoff f),
- gegebenenfalls mindestens einem Alkoxysilane und/oder Alkoxysiloxane d), sofern nicht in der ersten oder dritten Teilmischung enthalten,
- gegebenenfalls mindestens einem Inhibitor e) und
- gegebenenfalls mindestens einem Hilfsstoffe g) hergestellt ,
   eine dritte Teilmischung durch Zusammengeben von
- mindestens einem eine aromatische Gruppe enthaltenden Organohydrogensiloxan b1) und/oder
- mindestens einem Alkoxysilan und/oder Alkoxysiloxan d),
- gegebenfalls mindestens einem Organopolysiloxan a),
- gegebenfalls mindestens einem Füllstoff f) und
- gegebenenfalls mindestens einem Hilfstoff g)
hergestellt und die drei Teilmischungen anschließend vermischt.

Der Begriff "Teilmischung" bzw. "Reaktivkompönente" schließt auch den Fall ein, dass die Teilmischung nur eine Komponente enthält.

Gegenstand der Erfindung sind weiterhin additionsvernetzte Silikonkautschukmischungen, die durch Vernetzen bzw. Vulkanisieren der erfindungsgemäßen, additionsvernetzenden Silikonkautschulanischungen erhalten werden. Das Vernetzen bzw. Vulkanisieren erfolgt je nach Reaktivität der additionsvernetzenden Silikonkautschukmischungen in einem Temperaturbereich von 0 bis 300 °C.

Das Vernetzen kann gegebenenfalls unter Normaldruck, Vakuum bis 20 mbar oder Überdruck in Gegenwart von Umgebungsluft erfolgen. Überdruck in Gegenwart von Umgebungsluft schließt das Spritzgießen und das Vernetzen auf einer Substratoberfläche unter Spritzbedingungen, d.h. bis zu 300 bar bezogen auf die Flächeneinheit des Formkörpers.

Bei den additionsvernetzten Silikonkautschukmischungen handelt es sich im allgemeinen um elastomere Formkörper.

Gegenstand der Erfindung ist weiterhin ein Verfahren zur Herstellung von Verbund-Formteilen dadurch gekennzeichnet, dass mindestens eine der erfindungsgemäßen, additionsvernetzenden Siliconkautschukmischungen auf einem mineralischen, metallischen, duroplastischen und/oder thermoplastischen Substrat zur Vernetzung gebracht wird.

Ein bevorzugtes Substrat ist ein thermoplastisches Substrat, besonders bevorzugt ist das Substrat aus Polybutylenterephthalat, Polyamid oder Polyphenylensulfid.

In einer bevorzugten Ausführungsform des erfindungsgemäßen Verfahrens zur Herstellung der Verbund-Formteile wird die erfindungsgemäße, additionsvernetzende Siliconkautschukmischung auf der Oberfläche eines zuvor hergestellten thermoplastischen Formteils gegebenenfalls unter Aufstreichen, Giessen, Kalandrieren, Rakeln sowie Walzen vorzugsweise bei Normaldruck aufgetragen, anschließend bei Temperaturen von 0 bis 300°C, bevorzugt 50 bis 250 °C, vernetzt und dabei zur Haftung gebracht.

Besonders bevorzugt erfolgt die Herstellung des bevorzugt thermoplastischen Formteils ummittelbar vor dem Auftragen der additionsvernetzenden Siliconkautschukmischung.

In einer weiteren bevorzugten Ausführungsform des erfindungsgemäßen Verfahrens zur Herstellung der Verbund-Formteile wird die erfindungsgemäße, additionsvernetzende Siliconkautschukmischung auf der Oberfläche eines bevorzugt unmittelbar zuvor in einem Spritzgießwerkzeug spritzgegossenen thermoplastischen Formteils bei Temperaturen von 50 bis 300 °C vernetzt bzw. vulkanisiert and dabei zur Haftung gebracht wird.

Bei den vorstehend genannten Verfahren zur Herstellung der Verbund-Formteile wird additionsvernetzende Silikonkautschukmischung im allgemeinen durch Einspritzen in den Vulkanisieraum, in dem sich die Oberfläche des Substrates befindet, auf das Substrat gebracht. Dabei wird die additionsvernetzende Silikonkautschukmischung bevorzugt unmittelbar vorher durch Vermischen der Komponenten a) bis g) hergestellt. Besonders bevorzugt werden vorher die oben beschriebenen reaktiven Teilmischungen hergestellt, die anschließend vermischt werden. Die reaktiven Teilmischungen können dabei auch direkt auf das zu beschichtende Substrat aufgespritzt und anschließend versetzt werden.

Die Substrate, die mit den erfindungsgemäßen vernetzten Siliconkautschukmischungen beschichtet sind, schließen weiterhin zum Beispiel ein: Glas, gegebenenfalls vorbehandeltes Metall oder vorzugsweise, gegebenenfalls vorbehandelter Kunststoff. Als thermoplastischer Kunststoff wird bevorzugt z.B. Polyethylenterephthalat, Polybutylenterephthalat, vollaromatische Polyester, flüssigkristalline Polyester, Polycyclohexylenterephthalat, Polytrimethylenterephthalat, aliphatische Polyamide, Polyphthalamid, partiell aromatische Polyamide, Polyphenylamid, Polyamidimide, Polyetherimide, Polyphenylenoxid, Polysulfon, Polyethersulfon, aromatische Polyetherketone, PMMA, Polycarbonat, ABS-Polymere, Fluorpolymere, syndiotaktisches Polystyrol, Ethylen-Kohlenmonoxid-Copolymere, Polyphenylensulfon, Polyarylensulfid, und Polyphenylensulfoxid. Duroplastische Kunststoffe schließen zum Beispiel ein: Melamin-, Urethan-, Epoxid- , Phenylenoxid- oder Phenolharze.

Während des Vernetzungs- bzw. Vulkanisationsprozesses werden diese Substratoberflächen mit mindestens einer der erfindungsgemäßen additions-vernetzbaren bzw. vernetzenden Siliconkautschukmischung zur Haftung gebracht.

Die in zwei bis drei reaktive Teilmischungen aufgeteilte Siliconkautschukmischung wird vor der Vulkanisation, durch Mischen in einem Spritzgießautomaten oder in einem vorgelagerten Mischkopf und gegebenenfalls anschließendem Statikmischer zusammengeführt, vermischt und dann bei 0-300 °C vernetzt und zur Haftung gebracht. Vorzugsweise spritzt man die Komponenten nach dem Vennischen in ein Formwerkzeug bei erhöhter Temperatur von 50-250 °C ein. Das die Siliconkautschukmischung aufnehmende Formnest dieses Werkzeuges braucht nicht beschichtet oder mit Formtrennmitteln behandelt zu werden, um die Haftung an der Werkzeugoberfläche für die Entformung ausreichend klein zu halten. Für die konstruktive Gestaltung der Formen die vorzugsweise nacheinander folgend mit einem duroplastischen oder thermoplastischen sowie einem elastomeren Material beschickt werden, findet man Hinweise in Schwarz; Ebeling; Furth: Kunststoffverarbeitung, Vogel-Verlag, ISBN: 3-8023-1803-X

Walter Michaeli: Einführung in die Kunststoffverarbeitung, Hanser-Verlag, ISBN 3-446-15635-6.
Um die Formen führen und geschlossen halten zu können, wählt man vorzugsweise Spritzgieß(guss)automaten mit Zuhaltekräften von größer 30001V/cm² Formteil-oberfläche.

Für die erfindungsgemäßen Verfahren sind alle gängigen Spritzgussautomaten einsetzbar. Die technische Auswahl wird von der Viskosität der Siliconkautschukmischung sowie der Formteildimension bestimmt.

Die Mengenverhältnisse der eingesetzten reaktiven Teilmischungen entsprechen denen, die nach dem Vermischen die erfindungsgemäss beschriebenen Siliconkautschukmischungen ergeben. Sie werden durch das gewünschte Si-Alkenyl zu SiH-Verhältnis sowie die notwendigen Mengen an haftvermittelnden Bestandteilen der Kompononten b1) und gegebenenfalls b2) bestimmt.

Gegenstand der Erfindung ist zudem die Verwendung der erfindungsgemäßen additionsvernetzenden Siliconkautschukmischung zur Herstellung von Verbund-Formteilen wie z.B. Dicht- und/oder Dämpfungs- Halterungselementen; Griffen, Tastaturen, Schalter, Duschköpfen, Steckern mit elastomeren Dichtungen, Lampenfassungen oder sonstigen Befestigungen, die gleichzeitig ein Thermoplast- und ein Siliconkautschukteil aufweisen.

### Ausführungsbeispiele

### Beispiel 1 (Vergleichsversuch)

### Herstellung einer Basismischung BM 1 :

In einem Dissolver wurden 9,1 Teile dimethylvinylsiloxyendgestopptes Polydimethylsiloxan a1) mit einer Viskosität von 10 Pa.s (25 °C) und 16,5 Teile dimethylvinylsiloxyendgestopptes Polydimethylsiloxan a2) mit einer Viskosität von 65 Pa.s (25 °C) mit 2,9 Teilen Hexamethyldisilazan und 1,0 Teilen Wasser gemischt, anschließend mit 11,1 Teilen pyrogener Kieselsäure f) mit einer BET-Oberfläche von 300 m²/g (Aerosil 300® Degussa) vermischt, auf ca. 100 °C erwärmt, ca. 1 h gerührt und danach bei 150 bis 160 °C von Wasser und überschüssigen Resten des Hydrophobierurigsmittels befreit (zum Schluß im Vakuum bei p = 20 mbar) und anschließend mit 6,2 Teilen a1) verdünnt. Es wird eine Basismischung BM 1 erhalten.

Nach dem Erkalten wurden ca. 200 Teile der Basismischung BM 1 mit 6 Teilen des dimethylvinylsiloxy-endgestoppten Polydimethylsiloxans a1) mit einer Viskosität von 10 Pa.s (25 °C), 0,6 Teilen eines dimethylvinylsiloxyendgestoppten Polydimethylsiloxans a3) mit Methylvinylsiloxygruppen mit einem Vinylgehalt von 2 mmol/g und einer Viskosität von 0,2 Pa.s, 1,5 Teilen Glycidyloxypropyltrimethoxysilan, 1,8 Teilen Methacryloxypropyl-trimethoxysilan sowie 0,1 Teilen Ethinylcyclohexanol als Inhibitor und 0,0145 Teilen einer Pt-Komplexverbindung c) mit Alkenylsiloxan als Liganden in Tetramethyltetravinylcyclotetrasiloxan (Pt-Gehalt: 15 Gew.-%) weiterhin mit 1,1 Teil eines Trimethylsilyl-endgestoppten Methylhydrogensiloxans b2) mit einem mittleren SiH-Gehalt von 15 mmol/g und einem mittleren Gehalt von 30 MeHSiO-Gruppen pro Molekül der Komponente b2), 2,0 Teilen eines Trimethylsilyl-endgestoppten Diphenylmethylhydrogen-dimethyl-polysiloxans b1) M₂D₇D^{H}₆D^{phe2}_{0,9} mit einem mittleren SiHmit einem mittleren SiH-Gehalt von 4,9 mmol/g vermischt. Die Komponente b1) ist aus einer anionischen Äquilibrierung hervorgegangen.

Die reaktive Abmischung wird jeweils in eine Form mit einem Färmennest, das jeweils ein eingelegtes Thermoplastteil, wie in tabelle 1 genannt, enthält, unter den gegebenen Bedingungen gehärtet bzw. vulkanisiert. Es wird bei allen geprüften Elastomer-Thermoplast-Verbundteilen ein gutes Haftungsergebnis erzielt.

### Beispiel2 (erfindungsgemäß)

Nach dem Erkalten wurden ca. 200 Teile der Basismischung BM 1 mit 6 Teilen des dimethylvinylsiloxyendgestoppten Polydimethylsiloxans a1) mit einer Viskosität von 10 Pa.s (25 °C), 0,6 Teilen eines dimethylvinylsiloxy-endgestoppten Polydimethylsiloxans a3) mit Methylvinylsiloxygrüppen mit einem Vinylgehalt von 2 mmol/g und einer Viskosität von 0,2 Pa.s (25 °C), 1,5 Teilen Glycidyloxypropyltrimethöxysilan, 1,8 Teilen Methacryloloxypropyltrimethoxysilan sowie 0,1 Teilen Ethinylcyclohexanol als Inhibitor und 0,0145 Teilen einer Pt-Komplexverbindung c) mit Alkenylsiloxan als Liganden in Tetramethyltetravinylcyclotetrasiloxan (Pt-Gehalt: 15 Gew.-%) und weiterhin mit 0,34 Teilen eines Trimethylsilylendgestoppten Methylhydrogensiloxans b2) mit einem mittleren SiH-Gehalt von 15 mmol/g und einem mittleren Gehalt von 30 MeHSiO-Gruppen pro Molekül der Komponente b2), 2,0 Teilen eines Trimethylsilyl-endgestoppten Diphenylmethylhydrogen-dimethyl-polysiloxans M₂D₂D^{H}₂₄D^{phe2}₂ mit einem mittleren SiH-Gehalt von 10,8 mmol/g als Komponente b1) vermischt. Die Komponente b1) ist aus einer anionischen Äquilibrierung hervorgegangen.

Die reaktive Abmischung wird jeweils in eine Form mit einem Formennest, das jeweils ein eingelegtes Thermoplastteil, wie in Tabelle 1 genannt, enthält, unter den gegebenen Bedingungen gehärtet bzw. vulkanisiert. Es werden allen geprüften Elastomer-Thermoplast-Verbundteilen hervorragende Haftungsergebnisse erzielt, die in der Mehrzahl höher liegen als die des Vergleichsbeispieles 1.

**Tabelle 1**

| Substrat | Beispiel 1 Vergleich | Beispiel 2 erfindungsgemäß |
|---|---|---|
| | [N/mm] | [N/mm] |
| PA 6.6 | 2,6 | 4,0 |
| PA 6 | 3,5 | 2,9 |
| PBT | 2,5 | 3,5 |
| PPS | 2,0 | 3,2 |
| **Summe** | **10,6** | **13,6** |

### Herstellung und Bewertung der Verbundteile:

Die Verbundteile wurden in einer Laborpressform nach Einlegen der Thermoplast-Formteile von ca. 3 mm Dicke durch Vulkanisieren der jeweiligen Siliconkautschukmischung bei 175 °C über 10 Minuten auf der Oberfläche des jeweiligen Thermoplastformteiles hergestellt.

Die in den Beispielen eingesetzten Formen für die Herstellung der Verbundformteile waren Stahlformen mit Oberflächenbeschichtung aus Teflon®. Die Haftung der ausgehärteten Siliconkautschukmischungen auf verschiedenen Thermoplastsubstraten wurde in Anlehnung an DIN 53 289 (Rollenschälversuch) mit mindestens jeweils 2 Probekörpern bei einer Zuggeschwindigkeit von 100 mm/min 24 Stunden nach Herstellung geprüft, ohne die Verbundteil-Probekörper einer zusätzlichen Wärmebehandlung zuzuführen. Die Ergebnisse der Rollenschälversuche sind in Tabelle 1 zusammengefässt.

## Patentansprüche

1. Additionsvernetzende Siliconkautschukmischung, enthaltend:
a) mindestens ein lineares oder verzweigtes Organopolysiloxan mit mindestens zwei Alkenylgruppen mit einer Viskosität von 0,01 bis 30.000 Pa.s (25°C),
b1) mindestens ein Organohydrogensiloxan mit jeweils im Mittel mindestens 20 SiH-Einheiten pro Molekül, das mindestens einen organischen Rest aufweist, der mindestens einen Bestandteil enthält, der ausgewählt wird aus aromatischen Gruppen,
b2) gegebenenfalls ein oder mehrere Organohydrogenpolysiloxane, die im Mittel mindestens zwei SiH-Gruppen pro Molekül aufweisen und in denen die organischen Reste ausgewählt sind aus: gesättigten und ungesättigten aliphatischen Kohlenwasserstoffresten,
c) mindestens einen Hydrosilylierungs-Katalysator,
d) mindestens einen Bestandteil, der aus der Gruppe ausgewählt ist, die besteht aus: Alkoxysilanen und/oder Alkoxysiloxanen, die jeweils mindestens eine Epoxygruppe aufweisen, Acryl- und Methacryloxyalkyltrialkoxysilanen, sowie Kondensationsprodukten der zuvor genannten Verbindungen durch Reaktion mit Wasser, Alkoholen, Silanolen und/oder Siloxandiolen,
e) gegebenenfalls mindestens einen Inhibitor,
f) gegebenenfalls mindestens einen, gegebenenfalls oberflächlich modifizierten Füllstoff,
g) gegebenenfalls mindestens einen Hilfsstoff, wobei
die Komponente b1) ausgewählt wird aus linearen, verzweigten oder cyclischen Polysiloxanen ausgewählt aus: die Siloxy-Einheiten aufweisen, 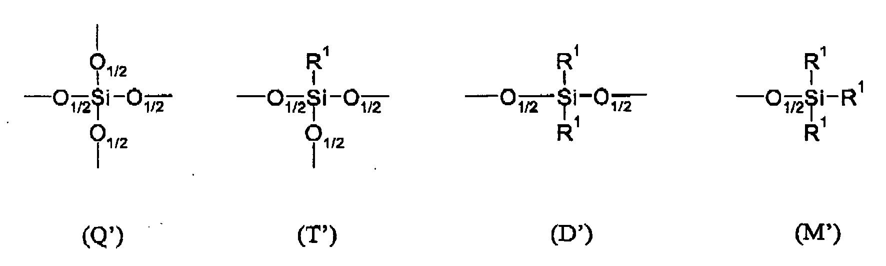 worin R¹ gleich oder verschieden sein kann und aus der Gruppe ausgewählt wird, die besteht aus
- Wasserstoff,
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl und Halogen, insbesondere Fluor, besteht,
- einem geradkettigen, verzweigten oder cyclischen Alkenylrest mit bis zu 12 Kohlenstoffatomen,
- einer aromatischen Gruppe und
- einem geradkettigen, verzweigten oder cyclischen Alkoxyrest mit bis zu 6 Kohlenstoffatomen,
oder zwei Gruppen R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen.

2. Additionsvernetzende Siliconkautschukmischung nach Anspruch 1, **dadurch gekennzeichnet, dass** das Organopolysiloxan a) ein lineares oder verzweigtes Polysiloxan ist, das Siloxy-Einheiten aufweist, ausgewählt aus: 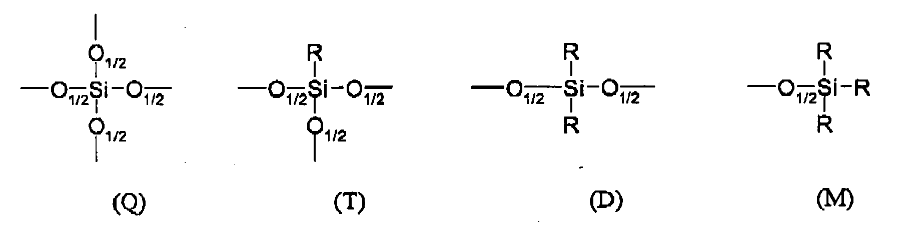 worin die Substituenten R gleich oder verschieden sein können und aus der Gruppe ausgewählt werden, die besteht aus
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl und Halogen, insbesondere Fluor, besteht,
- einem geradkettigen, verzweigten oder cyclischen Alkenylrest mit bis zu 12 Kohlenstoffatomen,
- einem Phenylrest,
- Hydroxyl und
- einem geradkettigen, verzweigten oder cyclischen Alkoxyrest mit bis zu 6 Kohlenstoffatomen,
oder zwei Substituenten R aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
mit der Maßgabe, dass mindestens zwei Substituenten R je Molekül den genannten Alkenylrest darstellen, der gleich oder verschieden sein kann.

3. Additionsvernetzende Siliconkautschukmischung nach einem oder mehreren der Ansprüche 1 bis 2, worin das Organohydtogensiloxan b1) im Mittel jeweils mindestens 23 SiH-Einheiten pro Molekül aufweist.

4. Additionsvernetzende Siliconkautschukmischung nach einem oder mehreren der Ansprüche 1 bis 3, worin der Si-H-Gehalt des Organehydrogensiloxans b1), definiert als das Verhältnis der siliziumgebundenen H-Atome bezogen auf die Summe der siliziumgebundenen H-Atome und der siliziumgebundenen organischen Gruppen mehr als 36 Mol.-% beträgt.

5. Additionsvernetzende Siliconkautschukmischung nach einem oder mehreren der Ansprüche 1 bis 6, worin das Organohydrogensiloxan b1) ein lineares triorganosiloxy- und/oder diorganohydrogensiloxy-endgestopptes Organohydrogensiloxan ist, worin die Triorganosiloxy-Endgruppen ausgewählt werden aus der Gruppe, die besteht aus Trimethylsiloxy, Triphenylsiloxy, Diphenylmethylsiloxy, Phenyldimethylsiloxy, Phenylethyldimethylsiloxy und Phenylpropyldimethylsiloxy, die Diorganohydrogensiloxy-Endgruppe bevorzugt eine Dimethylhydrogensiloxy-Gruppe ist, und das im Mittel 20 bis 1000 Methylhydrogensiloxy-Einheiten, im Mittel weniger als 500 Dimethylsiloxy-Gruppen, im Mittel weniger als 360 (Methyl)(Phenyl)-Siloxy-Einheiten und im Mittel weniger als 180 Diphenylsiloxy-Einheiten aufweist.

6. Additionsvernetzende Siliconkautschukmischung nach einem oder mehreren der Ansprüche 1 bis 5, **dadurch gekennzeichnet, dass** die Alkoxysilane gemäß Komponente d) ausgewählt werden aus Glycidoxypropyltrialkoxysilan, 2-(3,4-Epoxycyclohexyl)ethyltrialkoxysilan und Methacryloxypropyltrialkoxysilan.

7. Verfahren zur Herstellung der additionsvernetzenden Siliconkautschukmischung nach einem oder mehreren der Ansprüche 1 bis 6, **dadurch gekennzeichnet, dass** es das Vermischen der Komponenten a) bis d) und wahlweise der Komponenten e) bis g) umfasst.

8. Verfahren nach Anspruch 7, **dadurch gekennzeichnet, dass** es die Herstellung mindestens einer Teilmischung, die mehr als eine aber nicht alle der Komponenten a) bis g) umfasst, beinhaltet.

9. Verfahren nach Anspruch 7 oder 8, **dadurch gekennzeichnet, dass** eine erste Teilmischung durch Zusammengeben von
- mindestens einem Organopolysiloxan a)
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d), hergestellt wird,
eine zweite Teilmischung durch Zusammengeben von
- gegebenenfalls einem Organopolysiloxan a),
- mindestens einem Organohydrogensiloxan b1),
- gegebenenfalls mindestens einem Organohydrogenpolysiloxan b2),
- gegebenenfalls mindestens einem Füllstoff f),
- gegebenenfalls mindestens einem Alkoxysilan und/oder Alkoxysiloxan d),
- gegebenenfalls mindestens einem Inbibitor e) und
- gegebenenfalls mindestens einem Hilfsstoff g) hergestellt wird,
und die beiden Teilmischungen anschließend vermischt werden.

10. Additionsvernetzte Silikonkautschukmischungen erhalten durch Vernetzen der Zusammensetzungen nach einem der Ansprüche 1 bis 6.

11. Verfahren zur Herstellung von Verbund-Formteilen **dadurch gekennzeichnet, dass** mindestens eine additionsvernetzende Siliconkautschukmischung nach einem oder mehreren der Ansprüche 1 bis 6 auf einem Substrat zur Vernetzung gebracht wird.

12. Verfahren nach Anspruch 11, worin das Substrat ausgewählt wird aus mineralischen, metallischen, duroplastischen und/oder thermoplastischen Substraten.

13. Verfahren nach Anspruch 11 oder 12, **dadurch gekennzeichnet, dass** die Siliconkautschukmischung auf der Oberfläche eines zuvor hergestellten duroplastischen oder thermoplastischen Formteiles gegebenenfalls unter Aufstreichen, Giessen, Kalandieren, Rakeln sowie Walzen aufgetragen, anschließend bei Temperaturen von 0 bis 300 °C vernetzt und dabei zur Haftung gebracht wird.

14. Verfahren nach einem der Ansprüche 11 bis 13, **dadurch gekennzeichnet, dass** die Siliconkautschukmischung auf der Oberfläche eines zuvor in einem Spritzgießwerkzeug spritzgegossenen duroplastischen oder thermoplastischen Formteiles bei Temperaturen von 50-300 °C vulkanisiert and dabei zur Haftung gebracht wird.

15. Verfahren nach einem der Ansprüche 11 bis 14, **dadurch gekennzeichnet, dass** das thermoplastische Material aus Polybutylenterephthalat, Polyamid oder Polyphenylensulfid ausgewählt wird.

16. Verfahren nach einem der Ansprüche 11 bis 15, worin die Herstellung der additionsvernetzenden Silikonkautschukmischung durch Mischen von Teilmischungen, wie in einem der Ansprüche 8 oder 9 beschrieben erfolgt.

17. Komponentensatz, bestehend aus mindestens zwei lagerstabilen Komponenten, die beim Zusammengeben die additionsvernetzende Zusammensetzung nach einem der Ansprüche 1 bis 6 ergeben.

18. Verbundformteile aus einem mineralischen, metallischen, duroplastischen und/oder thermoplastischen Substrat und einer additionsvernetzten Silikonkautschukmischung nach Anspruch 10.

19. Verbundformteile nach Anspruch 18, bei denen es sich um Dicht- und/oder Dämpfungs-Halterungselemente, Griffe, Tastaturen, Steckern mit elastomeren Dichtungen, Schalter, Duschköpfe, Lampenfassungen oder sonstigen Befestigungen handelt.

20. Organohydrogenpolysiloxan b1), **dadurch gekennzeichnet, dass** es durchschnittlich mindestens 20 Hydrogensiloxy-Einheiten im Molekül aufweist, dass es Si-gebundene einwertige organische Reste enthält, die aromatische Gruppen enthalten, und der Gehalt der einwertigen organischen Reste, die aromatische Gruppen enthalten, weniger 12 Mol.% beträgt.

## Claims

1. An addition crosslinking silicon rubber blend comprising:
a) at least one linear or branched organopolysiloxane having at least two alkenyl groups, with a viscosity of 0.01 to 30000 Pa.s (25°C),
b1) at least one organohydrogensiloxane having in each case on average at least 20 SiH units per molecule and having at least one organic residue containing at least one constituent selected from aromatic groups,
b2) where appropriate, one or more organohydrogenpolysiloxanes which have on average at least two SiH groups per molecule and in which the organic residue are selected from the following: saturated and unsaturated aliphatic hydrocarbon residues,
c) at least one hydrosilylation catalyst,
d) at least one constituent selected from the group consisting of the following: alkoxysilanes and/or alkoxysiloxanes each having at least one epoxy group, acryl- and methacryloxyalkyltrialkoxysilanes, and condensation products of the aforementioned compounds through reaction with water, alcohols, silanols and/or siloxanediols,
e) where appropriate, at least one inhibitor,
f) where appropriate, at least one where appropriate surface modified filler,
g) where appropriate, at least one auxiliary, whereby
the component b1) is selected from linear, branched or cyclic polysiloxanes having siloxy units, selected from 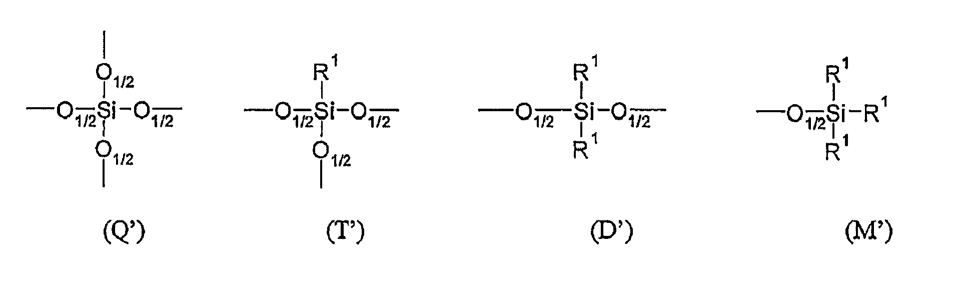 in which R¹ can be identical or different and are selected from the group consisting of
- hydrogen
- a linear, branched or cyclic alkyl residue having up to 12 carbon atoms, which where appropiate can be substituted by at least one substituent selected from the group consisting of phenyl and halogen, in particularly fluorine,
- a linear, branched or cyclic alkenyl residue having up to 12 carbon atoms,
- an aromatic group and
- a linear, branched or cyclic alkoxy residue having up to 6 carbon atoms,
or two substituents R¹ from different siloxy units together forming a linear, branched or cyclic alkanediyl residue having 2 to 12 carbon atoms between two silicon atoms.

2. The addition-crosslinking silicone rubber blend according claim 1, **characterized in that** the organopolysiloxane a) is a linear or branched polysiloxane having a siloxy units, selected from: 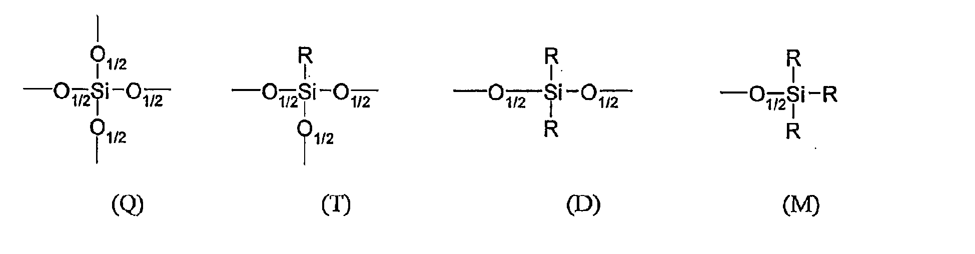 in which the substituent R can be identical or different and is selected from the group consisting of
- a linear, branched or cyclic alkyl residue having up to 12 carbon atoms, which, where appropriate, can be substituted by at least one substituent selected from the group, which consists of phenyl and halogen, in particularly fluorine,
- a linear, branched or cyclic alkenyl residue having up to 12 carbon atoms,
- a phenyl residue
- hydroxyl and
- a linear, branched or cyclic alkoxy residue having up to 6 carbon atoms,
or two substituents R from different siloxy units together forming a linear, branched or cyclic alkanediyl residue having 2 to 12 carbon atoms between two silicon atoms,
with the proviso that at least substituents R per molecule represent said alkenyl residue, which can be identical or different.

3. The addition-crosslinking silicone rubber blend of one or more of claims 1 to 2, wherein the organohydrogensiloxane b1) has on average in each case at least 23 SiH units per molecule.

4. The addition-crosslinking silicone rubber blend of one or more of claims 1 to 3, wherein the Si-H content of the organohydroxysiloxane b1), defined as the proportion of the silicon-bonded H atoms relative to the sum of the silicon-bonded H atoms and the silicon-bonded organic groups, is more than 36 mol%.

5. The addition-crosslinking silicone rubber blend of one or more of claims 1 to 6, wherein the organohydrogensiloxane b1) is a linear triorganosiloxy- and/or diorganohydrogensiloxyendstopped organohydrogensiloxane, wherein the triorganosiloxy end groups are selected from the group consisting of trimethylsiloxy, triphenylsiloxy, diphenylmethylsiloxy, phenyldimethylsiloxy, phenylethyldimethylsiloxy, and phenylpropyldimethoxysiloxy, the diorganohydrogensiloxy end group is preferably a dimethylhydrogensiloxy group, and that has on average 20 to 1000 methylhydrogensiloxy units, on average less than 500 dimethylsiloxy groups, on average less than 360 (methyl)(phenyl)siloxy units, and on average comprise less than 180 diphenylsiloxy units.

6. The addition-crosslinking silicone rubber blend of one or more of claims 1 to 5, **characterized in that** the alkoxysilanes according to component d) are selected from glycidoxypropyltrialkoxysilane, 2-(3,4-epoxycyclohexyl)-ethyltrialkoxy- silane, and methacryloxypropyltrialkoxysilane.

7. A method of producing the addition-crosslinking silicone rubber blend of one or more of claims 1 to 6, **characterized in that** it comprises mixing components a) to d) and optionally components e) to g).

8. The method of claim 7, **characterized in that** it includes the production of at least one partial mixture which comprises more than one, but not all, of components a) to g).

9. The method of claim 7 or 8, **characterized in that** a first partial mixture is prepared by combining
- at least one organopolysiloxane a),
- where appropriate, at least one filler f),
- where appropriate, at least one auxiliary g),
- at least one catalyst c), and
- where appropriate, at least one alkoxysilane and/or alkoxysiloxane d),
a second partial mixture is prepared by combining
- where appropriate, an organopolysiloxane a),
- at least one organohydrogensiloxane b1),
- where appropriate, at least one organohydrogenpolysiloxane b2),
- where appropriate, at least one filler f),
- where appropriate, at least one alkoxysilane and/or alkoxysiloxane d),
- where appropriate, at least one inhibitor e), and
- where appropriate, at least one auxiliary g),
and the two partial mixtures are subsequently mixed.

10. An addition-crosslinked silicone rubber blend obtained by crosslinking the compositions of any one of claims 1 to 6.

11. A method of producing composite moldings, **characterized in that** at least one addition-crosslinking silicone rubber blend of one or more of claims 1 to 6 is crosslinked on a substrate.

12. Method of claim 11, wherein the substrate is selected from mineral, metallic, thermoset and/or thermoplastic substrates,

13. The method of claim 11 or 12, **characterized in that** the silicone rubber blend is applied to the surface of a pre-produced thermoset or thermoplastic molding, where appropriate with spreading, casting, calendering, knife coating, and rolling, and then is crosslinked at temperatures of 0 to 300°C, in the course of which it is adhered.

14. The method of any one of claims 11 to 13, **characterized in that** the silicone rubber blend is vulcanized at temperatures of 50-300°C on the surface of a thermoset or thermoplastic molding which has been injection-molded beforehand in an injection mold, and in the course of this vulcanization is adhered.

15. The method of any one of claims 11 to 14, **characterized in that** the thermoplastic material is selected from polybutylene terephthalate, polyamide or polyphenylene sulfide.

16. The method of any one of claims 11 to 15, wherein the addition-crosslinking silicone rubber blend is produced by mixing partial mixtures as described in either of claims 8 and 9.

17. A component set consisting of at least two storage-stable components which when combined produce the addition-crosslinking composition of any one of claims 1 to 6.

18. A composite molding comprising a mineral, metallic, thermoset and/or thermoplastic substrate and an addition-crosslinked silicone rubber blend of claim 10.

19. The composite molding of claim 18, which is a sealing and/or damping mounting element, handle, keyboard, plug with elastomeric seals, switch, showerhead, lamp socket or other fixing.

20. An organohydrogenpolysiloxane b1) **characterized in that** it has on average at least 20 hydrogensiloxy units in the molecule, **in that** it includes Si-bonded monovalent organic residues which contain aromatic groups, and the amount of the monovalent organic residues which contain aromatic groups is less than 1 2 mol%.

## Revendications

1. Mélange de caoutchouc de silicone réticulant par addition, contenant :
a) au moins un organopolysiloxane linéaire ou ramifié ayant au moins deux groupements alcényle avec une viscosité de 0,01 à 30 000 Pa.s (25 °C),
b1) au moins un organohydrogénosiloxane ayant respectivement, en moyenne, au moins 20 unités SiH par molécule, qui présente au moins un radical organique, qui contient au moins un composant choisi parmi des groupements aromatiques,
b2) éventuellement un ou plusieurs organohydrogénopolysiloxanes, qui présentent, en moyenne, au moins deux groupements SiH par molécule et dans lesquels les radicaux organiques sont choisis parmi des radicaux hydrocarbonés aliphatiques saturés et insaturés,
c) au moins un catalyseur d'hydrosilylation,
d) au moins un composant choisi dans le groupe constitué d'alcoxysilanes et/ou d'alcoxysiloxanes, qui présentent respectivement au moins un groupement époxy, d'acryl- et méthacryloxyalkyltrialcoxysilanes, ainsi que de produits de condensation des composés précités par réaction avec de l'eau, des alcools, des silanols et/ou des siloxanediols,
e) éventuellement au moins un inhibiteur,
f) éventuellement au moins une charge éventuellement modifiée en surface,
g) éventuellement au moins un adjuvant, dans lequel
le composant b1) est choisi parmi les polysiloxanes linéaires, ramifiés ou cycliques présentant des unités siloxy choisies parmi les unités suivantes : 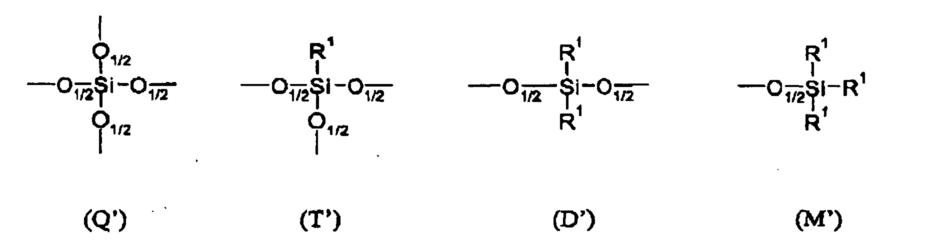 où R¹ peut être identique ou différent et est choisi dans le groupe constitué :
- de l'hydrogène,
- d'un radical alkyle linéaire, ramifié ou cyclique ayant jusqu'à 12 atomes de carbone, qui peut être éventuellement substitué avec au moins un substituant choisi dans le groupe constitué de phényle et d'halogène, en particulier de fluor,
- d'un radical alcényle linéaire, ramifié ou cyclique ayant jusqu'à 12 atomes de carbone,
- d'un groupement aromatique, et
- d'un radical alcoxy linéaire, ramifié ou cyclique ayant jusqu'à 6 atomes de carbone,
ou deux groupements R¹ constitués d'unités siloxy différentes forment conjointement un radical alcanediyle linéaire, ramifié ou cyclique ayant 2 à 12 atomes de carbone entre deux atomes de silicium.

2. Mélange de caoutchouc de silicone réticulant par addition selon la revendication 1, **caractérisé en ce que** l'organopolysiloxane a) est un polysiloxane linéaire ou ramifié qui présente des unités siloxy choisies parmi les unités suivantes : 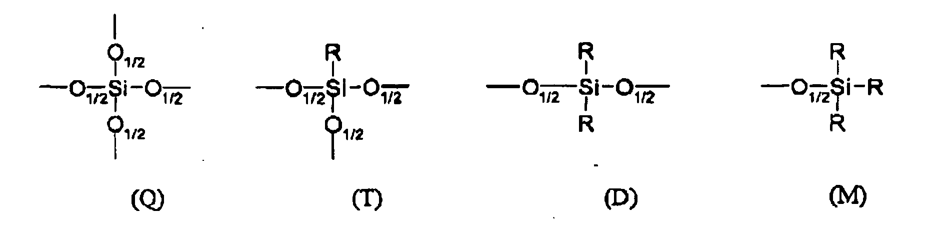 où les substituants R peuvent être identiques ou différents et sont choisis dans le groupe constitué
- d'un radical alkyle linéaire, ramifié ou cyclique ayant jusqu'à 12 atomes de carbone, qui peut être éventuellement substitué avec au moins un substituant choisi dans le groupe constitué de phényle et d'halogène, en particulier de fluor,
- d'un radical alcényle linéaire, ramifié ou cyclique ayant jusqu'à 12 atomes de carbone,
- d'un radical phényle,
- d'un hydroxyle, et
- d'un radical alcoxy linéaire, ramifié ou cyclique ayant jusqu'à 6 atomes de carbone,
ou deux substituants R constitués d'unités siloxy différentes forment conjointement un radical alcanediyle linéaire, ramifié ou cyclique ayant 2 à 12 atomes de carbone entre deux atomes de silicium,
à condition qu'au moins deux substituants R par molécule représentent le radical alcényle cité, qui peut être identique ou différent.

3. Mélange de caoutchouc de silicone réticulant par addition selon une ou plusieurs des revendications 1 à 2, dans lequel l'organohydrogénosiloxane b1) présente respectivement, en moyenne, au moins 23 unités SiH par molécule.

4. Mélange de caoutchoucs de silicone réticulant par addition selon une ou plusieurs des revendications 1 à 3, dans lequel la teneur en SiH de l'organohydrogénosiloxane b1), définie comme le rapport du nombre d'atomes d'hydrogène liés à un silicium par rapport à la somme des atomes d'hydrogène liés à un silicium et des groupements organiques liés à un silicium, est supérieure à 36 % en mole.

5. Mélange de caoutchouc de silicone réticulant par addition selon une ou plusieurs des revendications 1 à 6, dans lequel l'organohydrogénosiloxane b 1) est un organohydrogénosiloxane linéaire à terminaison bloquée par un groupement triorganosiloxy et/ou un diorganohydrogénosiloxy, dans lequel les groupements triorganosiloxy terminaux sont choisis dans le groupe constitué des groupements triméthylsiloxy, triphénylsiloxy, diphénylméthylsiloxy, phényldiméthylsiloxy, phényléthyl- diméthylsiloxy et phénylpropyldiméthylsiloxy, le groupement diorganohydrogénosiloxy terminal est de préférence un groupement diméthylhydrogéno- siloxy, et qui présente, en moyenne 20 à 1000 unités méthylhydrogénosiloxy, en moyenne moins de 500 groupements diméthylsiloxy, en moyenne moins de 360 unités (méthyl)(phényl)siloxy et en moyenne moins de 180 unités diphényl- siloxy.

6. Mélange de caoutchouc de silicone réticulant par addition selon une ou plusieurs des revendications 1 à 5, **caractérisé en ce que** les alcoxysilanes selon le composant d) sont choisis parmi le glycidoxypropyltrialcoxysilane, le 2-(3,4-époxycyclohexyl)éthyltrialcoxysilane et le méthacryloxypropyl-trialcoxysilane.

7. Procédé de fabrication du mélange de caoutchouc de silicone réticulant par addition selon une ou plusieurs des revendications 1 à 6, **caractérisé en ce qu'**il comprend le mélange des composants a) à d) et, au choix, des composants e) à g).

8. Procédé selon la revendication 7, **caractérisé en ce qu'**il comprend la fabrication d'au moins un mélange partiel, qui contient plus d'un composant, mais pas tous les composants a) à g).

9. Procédé selon la revendication 7 ou 8, **caractérisé en ce que** l'on fabrique un premier mélange partiel par addition conjointe
- d'au moins un organopolysiloxane a),
- éventuellement d'au moins une charge f),
- éventuellement d'au moins un adjuvant g),
- d'au moins d'un catalyseur c), et
- éventuellement d'au moins un alcoxysilane et/ou d'un alcoxysiloxane d), un second mélange partiel par addition conjointe
- éventuellement d'un organopolysiloxane a),
- d'au moins un organohydrogénosiloxane b1),
- éventuellement d'au moins un organohydrogénopolysiloxane b2),
- éventuellement d'au moins une charge f),
- éventuellement d'au moins un alcoxysilane et/ou d'un alcoxysiloxane d),
- éventuellement d'au moins un inhibiteur e), et
- éventuellement d'au moins un adjuvant g),
et l'on mélange ensuite les deux mélanges partiels.

10. Mélanges de caoutchouc de silicone réticulant par addition obtenus par réticulation des compositions selon l'une quelconque des revendications 1 à 6.

11. Procédé de fabrication de pièces moulées composites, **caractérisé en ce que** l'on réticule au moins un mélange de caoutchouc de silicone réticulant par addition selon une ou plusieurs des revendications 1 à 6 sur un substrat.

12. Procédé selon la revendication 11, dans lequel le substrat est choisi parmi des substrats minéraux, métalliques, duroplastiques et/ou thermoplastiques.

13. Procédé selon la revendication 11 ou 12, **caractérisé en ce que** l'on applique le mélange de caoutchouc de silicone à la surface d'une pièce moulée duroplastique ou thermoplastique, fabriquée au préalable, éventuellement par application à la brosse, par coulée, par calandrage, à la racle ainsi que par laminage, puis on procède à sa réticulation à une température de 0 à 300 °C, ce qui provoque son adhérence.

14. Procédé selon l'une quelconque des revendications 11 à 13, **caractérisé en ce que** l'on vulcanise le mélange de caoutchouc de silicone à la surface d'une pièce moulée duroplastique ou thermoplastique auparavant moulée par injection dans un outil de moulage par injection à une température de 50 à 300 °C, ce qui provoque son adhérence.

15. Procédé selon l'une quelconque des revendications 11 à 14, **caractérisé en ce que** le matériau thermoplastique est choisi parmi le poly(téréphtalate de butylène), un polyamide ou le poly(sulfure de phénylène).

16. Procédé selon l'une quelconque des revendications 11 à 15, dans lequel la fabrication du mélange de caoutchouc de silicone réticulant par addition se fait par mélange de mélanges partiels, tels qu'ils sont décrits dans l'une quelconque des revendications 8 et 9.

17. Jeu de composants, constitué d'au moins deux composants stables au stockage, qui donnent, par addition conjointe, la composition réticulant par addition selon l'une quelconque des revendications 1 à 6.

18. Pièces moulées composites constituées d'un substrat minéral, métallique, duroplastique et/ou thermoplastique et d'un mélange de caoutchouc de silicone réticulant par addition selon la revendication 10.

19. Pièces moulées composites selon la revendication 18, qui sont des éléments de maintien d'étanchéité et/ou d'amortissement, des poignées, des claviers, des fiches avec des joints étanches élastomères, des commutateurs, de pommes de douche, des douilles de lampe ou d'autres fixations.

20. Organohydrogénopolysiloxane b1), **caractérisé en ce qu'**il présente, en moyenne, au moins 20 unités hydrogénosiloxy dans la molécule, **en ce qu'**il contient des radicaux organiques monovalents liés à du Si, qui contiennent des groupements aromatiques, et **en ce que** la teneur en radicaux organiques monovalents, contenant des groupements aromatiques, est inférieure à 12 % en mole.
